# EUROPÄISCHE PATENTSCHRIFT

(11) **EP 3 430 282 B1**
(45) Veröffentlichungstag und Bekanntmachung des Hinweises auf die Patenterteilung: **13.11.2019**
(21) Anmeldenummer: 17709412.5
(22) Anmeldetag: 06.03.2017
(51) Int. Cl.: F16D 23/02, F16D 21/04

(54) **BREMSEINRICHTUNG FÜR GETRIEBEZAHNRÄDER**
BRAKING DEVICE FOR TRANSMISSION GEARWHEELS
DISPOSITIF DE FREINAGE POUR ROUES DENTÉES DE BOÎTE DE VITESSES

(30) Priorität: 16.03.2016 DE 102016204282
(43) Veröffentlichungstag der Anmeldung: 23.01.2019
(73) Patentinhaber: Bayerische Motoren Werke Aktiengesellschaft, 80809 München (DE)
(72) Erfinder: FISCHER, Stephan, 82178 Puchheim (DE); GORDNER, Achim, 85253 Grossberghofen (DE)
(86) Internationale Anmeldenummer: PCT/EP2017/055127
(87) Internationale Veröffentlichungsnummer: WO 2017/157703

(56) Entgegenhaltungen:
- EP-A2- 0 849 110
- WO-A1-99/13236
- WO-A1-99/13236
- WO-A1-2007/073711
- WO-A1-2007/073711
- WO-A1-2011/107276
- AT-B1- 514 995
- AT-B1- 514 995
- DE-A1- 10 152 477
- DE-A1-102006 025 277
- DE-A1-102006 025 277
- DE-B- 1 096 213

## Beschreibung

Die Erfindung betrifft eine Bremseinrichtung für Getriebezahnräder zum Verringern eines Schaltstoßes beim Schalten. Vorrichtungen gemäß dem Oberbegriff der Erfindung sind aus dem Stand der Technik, insbesondere DE 10 2011 051 532 A1 bekannt.

Die DE 10 2006 025277 A1 befasst sich mit einem Getriebe, insbesondere für einen Lastkraftwagen. Die WO 99/13236 A1 befasst sich mit einem Getriebe mit synchronisierten Gängen.

Nachfolgend wird die Erfindung anhand eines Motorrads mit schaltbarem Getriebe näher erläutert, dies ist nicht als eine Einschränkung der Erfindung auf eine derartige Anwendung zu verstehen.

Bei Motorradgetrieben sind häufig einzelne oder alle Schaltstufen des Getriebes nicht synchronisiert und weiter weisen Motorräder häufig nasslaufende Trennkupplungen zwischen dem antreibenden Verbrennungsmotor und dem Getriebe auf. Dabei überträgt eine nasslaufende Kupplung konzeptbedingt auch in geöffnetem Zustand, insbesondere aufgrund der Newtonschen Scherreibung zwischen den Lamellen, ein Schleppmoment. Dies Schleppmoment führt beim Einlegen des ersten Gangs im Stillstand des Motorrads bei geöffneter Trennkupplung zu einem Schaltstoß, da ein Teil des Motorradgetriebes kinematisch mit dem stillstehenden Hinterrad gekoppelt ist, also stillsteht, und der andere Teil des Getriebes mit der momentanen Motordrehzahl des Verbrennungsmotors und diesem Schleppmoment angetrieben wird und daher rotiert. Wird in diesem Moment der ersten Gang durch herstellen einer formschlüssigen Verbindung eingelegt, so wird der durch das Schleppmoment angetriebene Teil des Motorradgetriebes schlagartig auf Drehzahl Null abgebremst und es kommt zum Schaltstoß.

Aus der DE 10 2011 051 532 A1 ist es bekannt, mittels eines Steuerungseingriffs die Drehzahl des Verbrennungsmotors zu verändern und so den Schaltstoß zu verringern.

Es ist eine Aufgabe der Erfindung ein Antriebssystem für ein Motorrad mit einem geringen Schaltstoß zur Verfügung zu stellen. Diese Aufgabe wird durch ein Antriebssystem gemäß Anspruch 1 gelöst, zu bevorzugende Weiterbildungen der Erfindung sind Gegenstand der abhängigen Ansprüche.

Im Sinne der Erfindung ist unter einem Kraftfahrzeug ein Fahrzeug zum Befördern wenigstens einer Person zu verstehen. Vorzugsweise ist unter einem Kraftfahrzeug in diesem Sinn ein einspuriges Fahrzeug insbesondere ein Motorrad zu verstehen.

Im Sinne der Erfindung ist unter einer Antriebsmaschine ein Antriebsmotor zu verstehen, welche zum Bereitstellen einer Antriebsleistung zum Überwinden von Fahrwiderständen des Kraftfahrzeugs eingerichtet ist. Vorzugsweise ist unter einer Antriebsmaschine eine Verbrennungskraftmaschine mit wenigstens einem oder mehreren Zylindern zu verstehen. Weiter vorzugsweise ist unter einer Antriebsmaschine ein elektromechanischer Energiewandler, vorzugsweise ein Elektromotor/Generator zu verstehen und besonders bevorzugt weist eine Antriebsmaschine ein Kombination aus zwei oder mehr der zuvor genannten Antriebsmaschinen auf, besonders bevorzugt ist eine solche Antriebsmaschine als ein sogenannter Hybridantrieb ausgebildet.

Im Sinne der Erfindung ist unter einem schaltbaren Getriebe eine Einrichtung zum Verändern eines Übersetzungsverhältnisses zwischen einer Getriebeeingangs- und einer Getriebeausgangswelle in diskreten Stufen zu verstehen. Vorzugsweise ist ein solches schaltbares Getriebe als ein Motorradgetriebe mit einer Vielzahl von diskreten Übersetzungsverhältnissen (Gängen) ausgebildet. Vorzugsweise wir der Gang mit der größten Übersetzung, also der Gang des Getriebes welcher in der Regel zum Anfahren aus dem Stillstand verwendet wird, als erster Gang bezeichnet. Weiter vorzugsweise ist wenigstens einer dieser Gänge des schaltbaren Getriebes unsynchronisiert, vorzugsweise wenigstens der erste Gang, weiter vorzugsweise ist eine Vielzahl von Gängen dieses schaltbaren Getriebes unsynchronisiert, bevorzugt sind alle Gänge unsynchronisiert. Synchronisierungen sind aus dem Kraftfahrzeugbau bekannt und werden, insbesondere bei Automobilgetrieben dazu verwendet, um reibschlüssig Drehzahldifferenz anzugleichen zwischen Bauteilen, welche zum Herstellen einer formschlüssigen Verbindung eingerichtet sind, bei unsynchronisierten Gängen geschieht keine solche reibschlüssige, berührende Drehzahlangleichung.

Im Sinne der Erfindung ist unter einer Trennkupplung eine Einrichtung zu verstehen, welche in Drehmomentübertragungsrichtung von der Antriebsmaschine zum schaltbaren Getriebe zwischen diesen angeordnet ist, sodass die Drehmomentübertragung durch diese Trennkupplung selektiv unterbrechbar ist. Vorzugsweise ist eine solche Trennkupplung als eine Lamellenkupplung und weiter vorzugsweise als eine nasslaufende Lamellenkupplung ausgebildet. Vorzugsweise weist eine nasslaufende Lamellenkupplung eine Vielzahl von Kupplungslamellen auf. Im geöffneten Zustand der Kupplungen sind diese Kupplungslamellen voneinander getrennt und es ist planmäßig kein Drehmoment mit der Kupplung übertragbar.

Insbesondere aufgrund der Schmierung der nasslaufenden Lamellenkupplung befindet sich Schmierstoff zwischen einzelnen Kupplungslamellen und ein gewisses Schleppmoment wird aufgrund der Flüssigkeitsreibung, diese kann auch als Newtonsche Scherreibung aufgefasst werden, übertragen.

Im Sinne der Erfindung ist unter einer Getriebeeingangswelle eine Welle des schaltbaren Getriebes zu verstehen, auf welche die von der Antriebsmaschine bereitstellbare Antriebsleistung übertragbar ist. Vorzugsweise ist die Getriebeeingangswelle unmittelbar mit der Trennkupplung verbindbar, beziehungsweise ist mit dieser verbunden, und weiter vorzugsweise ist diese Getriebeeingangswelle mittels der Trennkupplung mit der Antriebsmaschine selektiv und in drehmomentleitender Weise verbindbar.

Im Sinne der Erfindung ist unter einem Getriebezahnrad ein Zahnrad des schaltbaren Getriebes zu verstehen, welches zur Drehmomentübertragung in diesem vorgesehen ist. Vorzugsweise weist das schaltbare Getriebe eine Vielzahl von Getriebezahnrädern auf, von welchen vorzugsweise einzelne selektiv mit der Getriebeeingangswelle kinematisch koppelbar sind. Weiter vorzugsweise erfolgt diese kinematische Kopplung mittels einer formschlüssigen Verbindung.

Unter einer Kopplungseinrichtung ist eine Einrichtung zu verstehen, welche dazu vorgesehen ist, eine formschlüssige Verbindung mit wenigstens einem der Getriebezahnräder herzustellen. Vorzugsweise ist die Kopplungseinrichtung mit einer Getriebewelle des schaltbaren Getriebes drehfest und vorzugsweise axial verschieblich verbunden. Vorzugsweise weist die Kopplungseinrichtung eine Schiebemuffe oder eine Klauenkupplung zum formschlüssigen Verbinden eines der Getriebezahnräder mit einer Getriebewelle des schaltbaren Getriebes auf, sodass eine kinematische Kopplung dieses Getriebezahnrad mit der Getriebeeingangswelle selektiv herstellbar ist.

Im Sinne der Erfindung ist unter einer kinematischen Kopplung eine zwangsweise Verbindung der Kopplungseinrichtung oder des Getriebezahnrad mit der Getriebeeingangswelle zu verstehen. Vorzugsweise führt eine solche kinematische Kopplung dazu, dass eine Bewegung der Getriebeeingangswelle zu einer zwangsweisen Bewegung des mit dieser kinematisch gekoppelten Bauteils führt. Vorzugsweise können 2 kinematische miteinander gekoppelte Bauteile durch vorzugsweise eine oder bevorzugt mehrere Übersetzungsstufen baulich voneinander getrennt sein.

Im Sinne der Erfindung ist unter einem ersten Betriebszustand des Antriebssystems ein Zustand zu verstehen, in welchen sich die Trennkupplung in einem geöffneten Zustand befindet und entweder die Kopplungseinrichtung oder das Getriebezahnrad kinematische mit der Getriebeeingangswelle gekoppelt ist, wobei das jeweils andere der beiden genannten Bauteile nicht mit der Getriebeeingangswelle kinematische gekoppelt ist.

Dabei ist unter einem geöffneten Zustand der Trennkupplung, wie dargelegt, ein Zustand dieser zu verstehen, in welchen durch diese planmäßig kein Drehmoment übertragbar ist.

Vorzugsweise ist unter einem zweiten Betriebszustand des Antriebssystems ein Zustand zu verstehen, in welchen sowohl die Kopplungseinrichtung als auch das Getriebezahnrad kinematische mit der Getriebeeingangswelle gekoppelt sind. Vorzugsweise ist in diesem zweiten Betriebszustand die Trennkupplung weiterhin in einem geöffneten Zustand.

Vorzugsweise weist das Antriebssystem eine Bremseinrichtung zum berührungsfreien Übertragen einer Bremskraft von einem ersten Teil auf einen zweiten Teil der Bremseinrichtung auf. Weiter vorzugsweise ist der erste Teil der Bremseinrichtung kinematische mit der Getriebeeingangswelle koppelbar und der zweite Teil mit dem Getriebezahnrad. Insbesondere ist also durch die Bremseinrichtung berührungsfrei eine Bremskraft von der Getriebeeingangswelle auf das Getriebezahnrad übertragbar.

Insbesondere ist es durch ein derartiges Antriebssystem ermöglicht, eine, durch ein von der Trennkupplung hervorgerufenes Schleppmoment beschleunigte, Getriebeeingangswelle vor dem Einlegen eins Gangs, berührungsfrei abzubremsen und so den Schaltstoß, der beim Herstellen der formschlüssigen Verbindung zwischen der Kopplungseinrichtung und dem Getriebezahnrad auftreten kann zu verringern oder zu vermeiden.

In einer bevorzugten Ausführungsform der Erfindung ist die Bremseinrichtung als eine Wirbelstrombremse ausgebildet. Wirbelstrombremsen sind aus dem Stand der Technik bekannt und mit diesen ist ein besonders zuverlässiges Antriebssystem darstellbar.

In einer bevorzugten Ausführungsform der Erfindung weist die Wirbelstrombremse einen ersten Teil und einen zweiten Teil auf, wobei zwischen diesen beiden Teilen die Bremskraft berührungsfrei übertragbar ist. Vorzugsweise ist der erste Teil der Wirbelstrombremse mit der Getriebeeingangswelle drehfest verbunden. Weiter vorzugsweise ist der zweite Teil der Wirbelstrombremse drehfest mit dem Getriebezahnrad verbunden. Insbesondere durch eine solche drehfeste Verbindung der beiden Teile der Wirbelstrombremse mit dem Getriebezahnrad einerseits und mit der Getriebeeingangswelle andererseits ist ein besonders einfacher Aufbau des erfindungsgemäßen Antriebssystems darstellbar.

In einer bevorzugten Ausführungsform der Erfindung ist der erste Teil der Wirbelstrombremse mit der Kopplungseinrichtung verbunden und ist vorzugsweise wenigstens abschnittsweise oder bevorzugt vollständig in dieser aufgenommen. Vorzugsweise ist die Kopplungseinrichtung mit einer Wellenabeverbindung axial beweglich aber drehfest mit der Getriebeeingangswelle verbindbar.

In einer bevorzugten Ausführungsform der Erfindung weist der zweite Teil der Wirbelstrombremse einen ferromagnetischen Bereich auf. Vorzugsweise weist dieser Bereich als einen Bestandteil einen dauermagnetischen Werkstoff auf, bevorzugt Neodym. Vorzugsweise ist dieser ferromagnetische Bereich der Wirbelstrombremse dazu eingerichtet, in dem ersten Teil der Wirbelstrombremse, insbesondere bei einer Relativbewegung des ersten Teils gegenüber dem zweiten Teil, einen Wirbelstrom hervorzurufen.

In einer bevorzugten Ausführungsform der Erfindung weist der erste Teil der Wirbelstrombremse einen elektrisch leitenden Bereich auf. Vorzugsweise ist dieser elektrisch leitende Bereich als eine elektrische Spule oder bevorzugt ein elektrisch leitender Einsatz ausgebildet. Insbesondere durch eine elektrische Spule oder einen elektrischen Einsatz ist ein besonders großer Bremseffekt mit der Wirbelstrombremse erreichbar.

Insbesondere ist es zur Reduktion der Geräuschentwicklung während des Schaltvorgangs in den ersten Gang des schaltbaren Getriebes vorgesehen, dass die Wirbelstrombremse, welche vorzugsweise in das Getriebezahnrad und die, insbesondere als Schiebemuffe ausgebildete, Kopplungseinrichtung integriert ist, ein Bremsmoment zum berührungsfreien Abbremsen der Getriebeeingangswelle aufbringt.

Nachfolgend ist die Erfindung anhand der Figuren näher erläutert dabei zeigt:
- Figur 1:: einen schematisierten Schnitt durch ein Antriebssystem,
- Figur 2:: einen Schnitt durch ein Getriebezahnrad und eine Schaltmuffe auf der Getriebeeingangswelle.

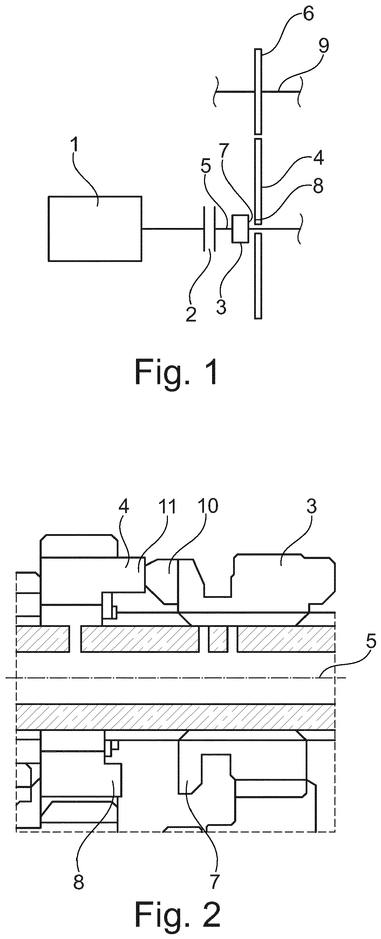

In Figur 1 ist ein schematisierter Schnitt durch das Antriebssystem dargestellt. Dabei weist dieses Antriebssystem eine Verbrennungskraftmaschine 1 auf. Die Verbrennungskraftmaschine 1 gibt ihr Antriebsdrehmoment über die Trennkupplung 2 an die Getriebeeingangswelle 5 eines Motorradgetriebes ab. Im Motorradgetriebe ist das Getriebezahnrad 4 für den ersten Gang über die Schiebemuffe 3 drehfest mit der Getriebeeingangswelle 5 verbindbar. Zum Darstellen des ersten Gangs kämmt das Getriebezahnrad 4 mit dem weiteren Getriebezahnrad 6, welches auf einer zur Getriebeeingangswelle 5 achsparallelen angeordneten weiteren Getriebewelle 9 angeordnet ist. Diese weitere Getriebewelle 9 ist kinematisch mit dem Hinterrad des Motorrads, zu welchem das dargestellte Antriebssystem gehört, gekoppelt, wobei dieses Hinterrad nicht dargestellt ist.

Aus dieser Konstellation folgt, dass im Stillstand des Motorrads bei einem aus dem Stand der Technik bekannten Motorradgetriebe die weitere Getriebewelle 9, das weitere Getriebezahnrad 6 und damit das Getriebezahnrad 4 stillstehen. Über die Trennkupplung 2, welche als nasslaufende Lamellenkupplung ausgebildet ist, wird bei Betrieb der Verbrennungskraftmaschine ein Schleppmoment übertragen, welches durch die Scherreibung der Flüssigkeit in der nasslaufenden Lamellenkupplung 2 hervorgerufen wird. Durch dieses Schleppmoment wird die Getriebeeingangswelle 5 in Rotation versetzt. Beim Einlegen des ersten Gangs, also wenn das Getriebezahnrad 4 mittels der Schiebemuffe 3 mit der Getriebeeingangswelle 5 drehfest verbunden wird, kommt es aufgrund des stillstehenden Getriebezahnrad 4 gegenüber der rotierenden Schiebemuffe 3 zu einem Schaltstoß, welche in der Regel als unkomfortabel empfunden wird. Weiter wirkt sich ein derartiger Stoß negativ auf die Lebensdauer der Schiebemuffe 3 und/oder das Getriebezahnrad 4 aus.

Erfindungsgemäß ist in dem dargestellten Antriebssystem eine Wirbelstrombremse 7, 8 vorgesehen, dabei ist der erste Teil 7 der Wirbelstrombremse in der Schiebemuffe 3 aufgenommen und der zweite Teil 8 im Getriebezahnrad 4. Diese Wirbelstrombremse 7, 8 führt dazu, dass beim Verbinden des Getriebezahnrad 4 mit der Getriebeeingangswelle 5 über die Schiebemuffe 3 eine Bremskraft zwischen dem ersten Teil der Wirbelstrombremse 7 und dem zweiten Teil der Wirbelstrombremse 8 hervorgerufen wird, so dass die rotierende Getriebeeingangswelle 5 gegenüber dem stillstehenden Getriebezahnrad 4 abgebremst wird und der Schaltstoß dadurch verringert wird.

Weiter ist es vorteilhafterweise so, dass der induzierte Wirbelstrom von dem axialen Abstand des ersten Teils 7 zum zweiten Teil 8 der Wirbelstrombremse abhängt, insbesondere rotiert die Getriebeeingangswelle 5 also praktisch verlustfrei und erst wenn sich die Schiebemuffe 3 zum Herstellen der formschlüssigen Verbindung dem Getriebezahnrad 4 annähert kann ein Bremsmoment aufgebracht werden.

In Figur 2 ist ein Teilschnitt durch das Getriebezahnrad 4, die Schiebemuffe 3 sowie die Getriebeeingangswelle 5 dargestellt. Das Getriebezahnrad 4 ist mittels der Schiebemuffe 3 selektiv mit der Getriebeeingangswelle 5 verbindbar die Schiebemuffe 3 weist im Bereich 7 eine elektrische Spule auf. In dieser elektrischen Spule 7 wird bei einer Relativdrehzahl der Schiebemuffe 3 gegenüber dem Getriebezahnrad 4 durch den im Bereich 8 angeordneten Neodymmagnet des Getriebezahnrads 4 ein Wirbelstrom hervorgerufen. Dieser Wirbelstrom ruft aufgrund der Lenzschen Regel ein Magnetfeld hervor, welches dem erzeugenden Magnetfeld entgegen gerichtet ist und so zu einer Abbremsung der Getriebeeingangswelle 5 gegenüber dem stillstehenden Getriebezahnrad 4 und einer Verringerung des Schaltstoßes beim Herstellen der formschlüssigen Verbindung zwischen der Schiebemuffe 3 und dem Getriebezahnrad 4 führt.

Die Bereiche 10, 11 auf der Schiebemuffe 3 und dem Getriebezahnrad 4 sind zum Ausbilden einer formschlüssigen Verbindung zwischen der Schiebemuffe 3 und dem Getriebezahnrad 4 eingerichtet. Diese Bereiche 10, 11 sind als eine Art Klauenkupplung ausgebildet.

## Patentansprüche

1. Antriebssystem für ein Motorrad mit einer Antriebsmaschine (1), welche mittels einer nasslaufenden Trennkupplung (2) mit einer Getriebeeingangswelle (5) eines schaltbaren Motorradgetriebes, welches wenigstens einem unsynchronisierten Gang aufweist, selektiv verbindbar ist und
mit einem Getriebezahnrad (4) und einer Kopplungseinrichtung (3), die zum Herstellen einer formschlüssigen Verbindung mit dem Getriebezahnrad (4) eingerichtet ist, wobei in einem ersten Betriebszustand entweder die Kopplungseinrichtung (3) oder das Getriebezahnrad (4) kinematisch mit der Getriebeeingangswelle (5) gekoppelt ist und in einem zweiten Betriebszustand beide,
wobei das Antriebssystem eine Bremseinrichtung (7, 8) zum berührungsfreien Übertragen einer Bremskraft in diesem ersten Betriebszustand von einem ersten Teil (7) auf einen zweiten Teil (8) der Bremseinrichtung aufweist, wobei der erste Teil (7) der Bremseinrichtung kinematisch mit der Getriebeeingangswelle (5) koppelbar ist und der zweite Teil (8) mit dem Getriebezahnrad (8) und wobei die Bremseinrichtung (7, 8) als eine Wirbelstrombremse ausgebildet **ist, dadurch gekennzeichnet, dass** der erste Teil (7) der Wirbelstrombremse drehfest mit der Getriebeeingangswelle (5) verbunden ist und der zweite Teil (8) drehfest mit dem Getriebezahnrad (4) verbunden ist.

2. Antriebssystem gemäß einem der vorhergehenden Ansprüche,
**dadurch gekennzeichnet, dass**
der erste Teil (7) der Wirbelstrombremse mit der Kopplungseinrichtung (3) verbunden ist.

3. Antriebssystem gemäß einem der vorhergehenden Ansprüche,
**dadurch gekennzeichnet, dass**
der zweite Teil (8) der Bremseinrichtung einen ferromagnetischen Bereich zum Erzeugen der Bremskraft aufweist.

4. Antriebssystem gemäß einem der vorhergehenden Ansprüche,
**dadurch gekennzeichnet, dass**
der erste Teil (7) der Bremseinrichtung einen elektrisch leitenden Bereich aufweist und dass dieser Bereich eine elektrische Spule oder einen elektrisch leitenden Einsatz aufweist.

## Claims

1. A drive system for a motorcycle with a drive machine (1) which can be selectively connected by means of a wet-running disconnect clutch (2) to a transmission input shaft (5) of a shiftable motorcycle transmission which has at least one unsynchronised gear, and
with a transmission gear wheel (4) and a coupling means (3) which is set up to produce a form-locking connection with the transmission gear wheel (4), wherein in a first operating state either the coupling means (3) or the transmission gear wheel (4) is coupled kinematically with the transmission input shaft (5), and in a second operating state both are, wherein the drive system has a braking means (7, 8) for contact-free transmission of a braking force in this first operating state from a first part (7) to a second part (8) of the braking means,
wherein the first part (7) of the braking means can be coupled kinematically with the transmission input shaft (5) and the second part (8) with the transmission gear wheel (8), and wherein the braking means (7, 8) is designed as an eddy-current brake, **characterised in that** the first part (7) of the eddy-current brake is connected non-rotationally with the transmission input shaft (5) and the second part (8) is connected non-rotationally with the transmission gear wheel (4).

2. A drive system according to one of the preceding claims,
**characterised in that**
the first part (7) of the eddy-current brake is connected to the coupling means (3).

3. A drive system according to one of the preceding claims,
**characterised in that**
the second part (8) of the braking means has a ferromagnetic region for generating the braking force.

4. A drive system according to one of the preceding claims,
**characterised in that**
the first part (7) of the braking means has an electrically conductive region and
**in that** this region has an electric coil or an electrically conductive insert.

## Revendications

1. Système d'entraînement destiné à un motocycle comprenant un moteur d'entrainement (1) qui peut être sélectivement relié au moyen d'un embrayage de séparation (2) fonctionnant en milieu lubrifié avec l'arbre d'entrée (5) d'une boîte de vitesses commutable du motocycle qui comporte au moins un rapport de vitesses asynchrone, et
une roue dentée (4) de la boîte de vitesses et un dispositif de couplage (3) qui est conçu pour l'obtention d'une liaison par la forme avec la roue dentée (4) de la boîte de vitesses, dans un premier état de fonctionnement le dispositif de couplage (3) ou la roue dentée (4) de la boîte de vitesses étant cinématiquement couplé(e) à l'arbre d'entrée (5) de la boîte de vitesses, et dans un second état de fonctionnement ces deux éléments étant couplés à cet arbre, le système d'entraînement comprenant un dispositif de freinage (7, 8) permettant de transmettre sans contact dans le premier état de fonctionnement, une force de freinage, d'un premier élément (7) à un second élément (8) du dispositif de freinage, le premier élément (7) du dispositif de freinage pouvant être cinématiquement couplé à l'arbre d'entrée (5) de la boîte de vitesses et le second élément (8) de celui-ci pouvant être cinématiquement couplé à la roue dentée (8) de la boîte de vitesses, le dispositif de freinage (7, 8) étant réalisé sous la forme d'un frein à courants de Foucault,
**caractérisé en ce que**
le premier élément (7) du frein à courants de Foucault est relié solidairement en rotation à l'arbre d'entrée (5) de la boîte de vitesses et le second élément (8) de ce frein est reliée solidairement en rotation à la roue dentée (4) de ma boîte de vitesses.

2. Système d'entraînement conforme à la revendication 1,
**caractérisé en ce que**
le premier élément (7) du frein à courants de Foucault est relié au dispositif de couplage (3).

3. Système d'entraînement conforme à l'une des revendications précédentes,
**caractérisé en ce que**
le second élément (8) du dispositif de freinage comporte une zone ferromagnétique permettant d'obtenir la force de freinage.

4. Système d'entraînement conforme à l'une des revendications précédentes,
**caractérisé en ce que**
le premier élément (7) du dispositif de freinage comporte une zone électriquement conductrice et cette zone comporte une bobine électrique ou une garniture électriquement conductrice.
